# EUROPEAN PATENT SPECIFICATION

(11) **EP 3 647 184 B1**
(45) Date of publication and mention of the grant of the patent: **30.03.2022**
(21) Application number: 19206742.9
(22) Date of filing: 01.11.2019
(51) Int. Cl.: B64C 11/48, B64C 11/00, B64C 11/46, B64C 27/20

(54) **ELECTRIC PROPELLER AND DUCTED FAN PROPULSION UNIT**
ANTRIEBSEINHEIT MIT ELEKTRISCHEM FAN UND MANTELPROPELLER
UNITÉ DE PROPULSION UTILISANT DES HÉLICES ÉLECTRIQUES ET DES SOUFFLANTES CARÉNÉES

(30) Priority: 01.11.2018 US 201862753992 P
(43) Date of publication of application: 06.05.2020
(73) Proprietor: Eviation Tech Ltd, 6092000 Kadima (IL)
(72) Inventor: BAR YOHAI, Omer, 3884000 Sdeh Itzhak (IL); TZIDON, Aziz, 6299412 Tel Aviv (IL); ZIVAN, Lior, 4284000 Yad Hanna (IL)
(74) Representative: Leihkauf, Steffen Falk

(56) References cited:
- WO-A1-2018/219856
- US-A1- 2012 328 433
- US-A1- 2015 284 071

## Description

### FIELD OF INVENTION

The invention relates to vehicles propulsion system and, in particular, to air vehicle electric propulsion systems.

### BACKGROUND OF THE INVENTION

Electrically powered model aircraft have been flown since the 1970s, with one unconfirmed report as early as 1957. They have since developed into small battery-powered unmanned aerial vehicles or drones, which, in the twenty-first century, have become widely used for many purposes.

The first manned free flight by an electrically powered airplane was not made until 1973.

All electric aircraft to date has been powered by electric motors driving thrust-generating propellers, thrust generating fans, or lift-generating rotors.

Electric propulsion for aircrafts may suggest the benefits of using a renewable energy source, zero emissions (of both carbohydrates and NOx), and quiet operation, but suffers from relative low energy density power source hence needs to be optimized to achieve adequate performance while keeping the main benefits.

U.S. Patent Application Publication No. 20150284071 entitled "Contra-rotating open rotor distributed propulsion system," discloses an aircraft propulsion system includes a gas turbine engine supported within an aircraft fuselage, a main drive driven by the gas turbine engine and an open rotor propeller system supported outside of the aircraft fuselage separately from the gas turbine engine. A secondary drive that is driven by the main drive drives the open rotor propeller system.

There is a need to provide an electric propulsion system which is optimized for a wide range of flight speeds, with reduced noise and increased safety. The required propulsion system should further be easy to control and with minor influence on the air vehicle dynamics.

### SUMMARY OF INVENTION

A propulsion system for a vehicle according to independent claim 1.

In one embodiment, the first and the second motors are rotating around a common rotation axis.

In one embodiment, each of the motor's rotation speed and/or direction can be independently controlled/adjusted.

In one embodiment, the propeller and ducted fan are operated to achieve optimized or maximal efficiency as measured by thrust per input power at desired velocities and altitudes. In a further embodiment, the setting of the rotations speeds and blades pitch angles are determined according to a preloaded performance chart or based on on-going performance measurement of the propulsion system. In some embodiments, the system is further configured to identify, re-adjust and recover from a failure of a single thrust generator, wherein the thrust generator is one of fan or propeller.

In one embodiment, the rotation speeds and the blade pitch angles of the propeller and of the fan are controlled to achieve optimized of at least one of efficiency of the propulsion unit, reduction of the noise of the system and minimization of combined torque of the system on the vehicle by independently controlling the ducted fan RPM, the propeller RPM, and the propeller blades pitch angle.

In one embodiment, the maximal thrust of each of the propeller and the ducted fan is set so as to provide thrust above a predetermined fail-thrust threshold, wherein the threshold is determined to ensure successful takeoff at a predetermined combination of takeoff parameters, including total weight, runway altitude, nose wind.

In some embodiments, the ducted fan wake is directed to flow over the first motor and the second motor so as to dissipate the heat generated by the motors. In some embodiments, the system is further designed to optimize the noise emissions, and in particular a control system for generating destructive interference, wherein the rotations speeds and blades pitch angles are determined according to a preloaded performance chart or based on on-going performance measurement of the propulsion system.

In some embodiments, the operation parameters of the ducted fan are set to optimize the cooling effect.

In some embodiments, operational parameters of the propulsion unit are optimizable for low noise emission, and in particular the ducted fan and propeller are controlled and coordinated such that the generated sound waves from each are generating destructive interference.

In some embodiments, the duct geometry comprises converging and/or curved elements adapted to compensate for non-straight flow at high angle of attack or sideslip.

In some embodiments, the propellers and the fans are corotating or counterrotating. In some embodiments, the propellers and the fans are counterrotating and are coordinated so that the total generated torque is equal to or near zero.

In some embodiments, the propellers and the fans are counterrotating, and are coordinated so that the total angular momentum of the system is equal to or near zero, such that no gyroscopic precession moment is transferred from the propulsion unit to the air vehicle upon maneuvering

In some embodiments, the second motor is an out-runner type or in-runner type electric motor.

### BRIEF DESCRIPTION OF THE DRAWINGS

The invention, both as to organization and method of operation, together with objects, features, and advantages thereof, may best be understood by reference to the following detailed description when read with the accompanying drawings in which:
Fig. 1 is a schematic 3D view illustration of the EPDF unit;
Fig. 2 is a schematic 3D view illustration of the EPDF unit with semi-transparent outer envelope;
Fig. 3 is a schematic illustration of the front view of an electric prop ducted fan (EPDF) unit, with a cross section A-A;
Fig. 4 is a schematic illustration the A-A cross section of the EPDF unit;
Fig. 5 is a schematic block diagram of a control system of an EPDF, such the EPDF of Fig. 4, according to embodiments of the present invention; and
Fig. 6 is a schematic cross section view of an optional design of an EPDF with a duct designed to consider airborne structure constrains, according to embodiments of the present invention.

It will be appreciated that, for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DETAILED DESCRIPTION OF THE INVENTION

In the following detailed description, numerous specific details are set forth in order to provide a thorough understanding of the invention. However, it will be understood by those skilled in the art that the present invention may be practiced without these specific details. In other instances, well-known methods, procedures, and components have not been described in detail so as not to obscure the present invention. Examples that are presented below relate, in some cases, to propulsion of airborne vehicle, however it would be apparent to those skilled in the art that analogous propulsion systems may be used for propelling other moving/propelled vehicles, such as marine or land vehicles.

Propeller propelled airborne vehicle (AVs) are widely used in commercial flights due to the relatively high energetic efficiency. Yet, propulsion provided by propeller suffer from an inherent disadvantage of the very low aerodynamic usability of the inner circle of the propeller full disk, due to the relatively low tangential speed at this inner ring, which is mainly dictated by the upper limit of the tangential speed of the propeller tips of the blades.

Further design issue that needs to be addressed with propeller propulsion is the transverse moment acting on the AV body in response to the propulsion produced by the propeller. Common solutions provide a reversed propeller that substantially nulls the sum of the moments, yet powering a reversed propeller causes increased weight, increased mechanical complexity and lower MTBF and reduced efficiency of the aft propeller which is in the wake of the front one.

The disadvantages listed above, and some others may be solved by embodiments of the present invention that are described below

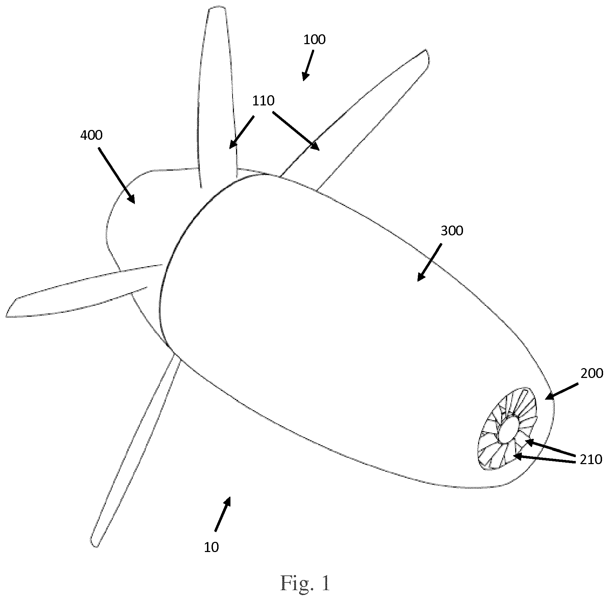

Reference is made now to **Fig. 1**, which is a schematic 3D view illustration of an electric prop ducted fan (EPDF) unit 10. The EPDF unit comprises at least one propeller 100 and at least one fan 200, each driven by an electric motor, and their axes of rotation are aligned along a common central line and they are disposed within the same aerodynamically-shaped nacelle 300. In addition, the EPDF may include a spinner 400, designed to reduce the total drag of the unit. The propeller 100 is comprised of a hub and number of propeller blades 110, and the fan 200 is comprised of a hub and some number of fan blades 210.

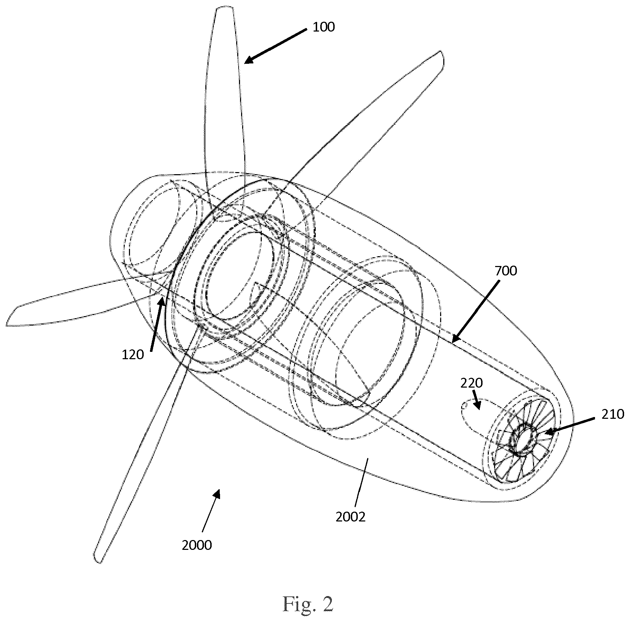

Reference is made now to **Fig. 2****,** which is a schematic 3D view illustration of the EPDF unit 2000 with semi-transparent outer envelope 2002. The EPDF unit 2000 internal assembly includes at least one fan assembly 200 comprising at least one fan-driving electric motor 220. The EPDF unit 2000 internal assembly further includes at least one propeller-driving electric motor 120, and a duct 700 with an inner diameter slightly greater than the fan blade's outer diameter. Duct 700 extends along the longitudinal dimension of EPDF unit 2000, wherein its forward-facing opening (with respect to the direction of flight of the AV) is free to allow flow of air through it, and its rear end accommodates fan 200. Blades 110 of propeller 100 may be disposed so as to leave the airway into duct 700 uninterrupted.

Each motor (120 and 220) can be independently controlled to produce a required power and provide required RPM and torque setting. In addition, the fan blades 210 of fan 200 and the propeller blades 110 of propeller 100 can each be of a fixed pitch type or a variable pitch type. The variable pitch type propeller and fan can be independently controlled in order to set the desired blades pitch angle of each.

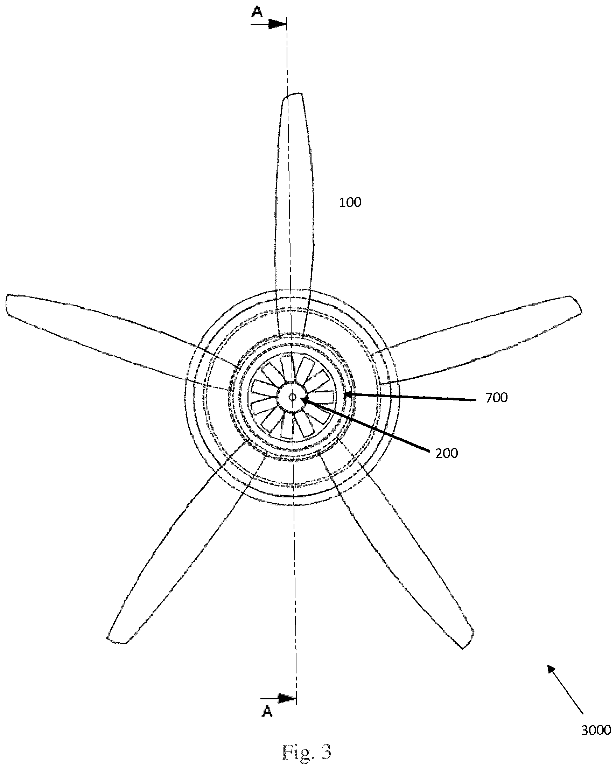

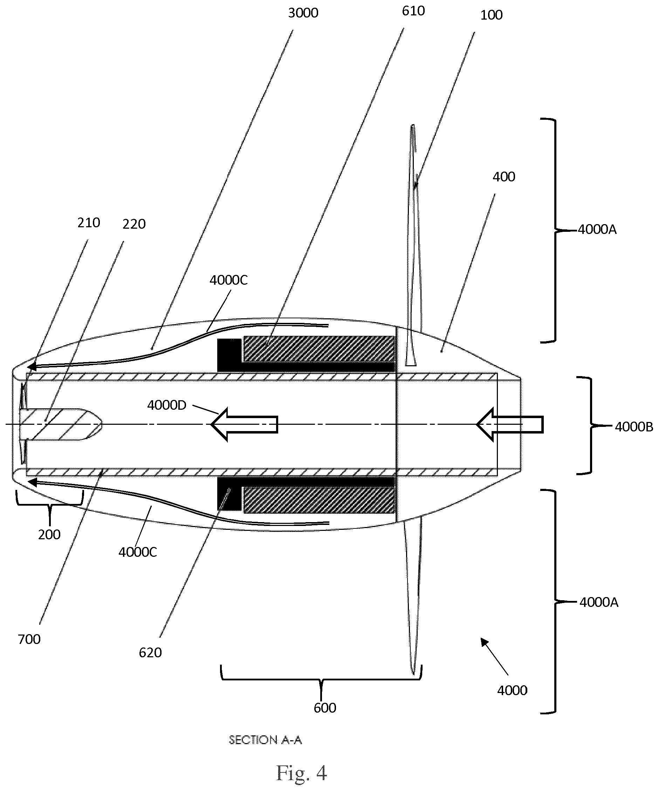

Reference is made now to **Fig. 3****,** which is a schematic illustration of the front view of an electric prop ducted fan (EPDF) unit 3000, with a cross section line A-A, and **Fig. 4**, which is a schematic illustration 4000 of the A-A cross section line of Fig. 3. The internal assembly of EPDF unit 3000 includes the rotor 610 and the stator 620 of the propeller-driving electric motor 600, which is an out-runner motor type (outer rotor, inner stator) with its stator surrounding the inner duct 700. Fan 200, with its fan motor 220 and fan blades 210, may be disposed within duct 700, for example close to the rear outlet of duct 700.

The design parameters of the EPDF 4000 may include the outer diameter of blades 210 of fan 200 in conjunction with the inner diameter of duct 700, the length of the duct 700, the inner and outer diameters of the propeller blades 110, the geometry of nacelle 3000 and spinner 400 geometry, propeller blades 110 geometry, fan blades 210 geometry, and the propeller-driving-motor 600 and fan-driving-motor 500 characteristics.

Design requirement may comprise, for example, total thrust per energy optimization (whether by optimizing the actual thrust or by reducing the propulsion's unit drag); noise emissions optimization (minimized noise) per required thrust; thermal cooling optimization (minimal temperature per operation point and operation conditions); total torque optimization (reduction to zero, or as close to zero as possible); total angular momentum optimization (reduction to zero, or as close to zero as possible) to minimize gyroscopic effects; and redundancy. Further, design constrains may include, for example, minimal total required thrust, propulsion unit weight, and size of propulsion production unit.

The duct inner air flow, generated by the fan 200, may efficiently dissipate the heat generated by the fan driving motor 220 and by the propeller-driving electric motor stator 610 and rotor 620.

The design parameters of EPDF 4000 may be optimized to provide required / maximal combined thrust of propeller 110 and fan 210, at certain flight conditions or certain range of flight conditions, and/or to provide cooling effect of the propeller driving motor, and/or noise emissions, and/or enable redundancy. For example, the relative sizes of propeller 110 and fan 210 may be selected to enable the providing of substantially equal aerodynamic thrust by propeller 110 and fan 210, by selecting the diameter of duct 700, by selecting the outer diameter of propeller 110, by setting the torque/moment, the RPM and the pitch angle of the blades 110 of propeller 100 and the blades 210 of fan 200. The relative direction of rotation of propeller 110 with respect to fan 210 may also be selected, e.g., in reverse directions for minimizing the combined torque of the EPDF 3000. It should be noted that ducted propellers are relatively more efficient compared to non-ducted propellers with similar other parameters (such as outer diameter, RPM, torque, etc.). Further consideration may take into account the required amount of dissipation of heat from propeller motor 120 and fan motor 220. In another example, the RPM and/or blades pitch angles may be selected to minimize the overall noise of the EPDF 3000.

A further, in-flight optimization can be performed by the capability to independently set the RPM, power/torque and possibly blade pitch angles of each thrust generator, thus enabling the optimization to be valid throughout the entire flight envelope.

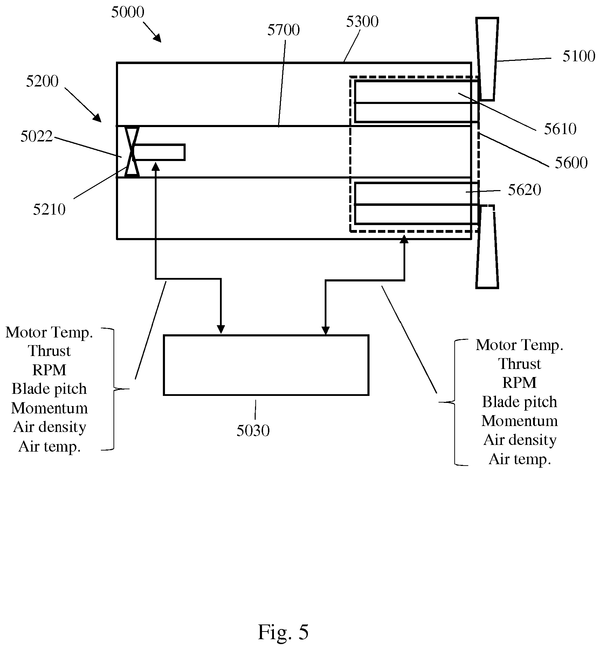

Reference is made now to **Fig. 5**, which is a schematic block diagram of the control system 5000 of an EPDF, such as EPDF 3000 of Fig. 4, according to some embodiments of the present invention. Control system 5000 may comprise propeller sensors and control unit 5600, fan sensors and control unit 5200, central control unit 5030 and communication channels connecting units 5022 and 5600 to unit 5030. Each of units 5022 and 5600 may comprise one or more sensors adapted to sense and provide signal indicative of motor temperature, momentary thrust provided by the motor, RPM of the motor, blade pitch angle, momentum/torque provided by the motor, air speed, density and temperature of the air at the entry to and/or the exit from the respective propeller or fan. Each of units 5022 and 5600 may comprise one or more actuators/effectors adapted to control one or more of motor rotational speed, motor momentary torque, motor thrust, and blades angle of pitch. Central control unit 5030 may comprise a processor/controller, memory and or storage unit(s), I/O interface units and optionally wireless communication transceiver (all are not shown and may be embodied as known in the art). Central control unit 5030 may have stored therein in the storage unit program(s) which when executed may receive, store and process data received from each of units 5022 and 5600, and to provide momentary control signals to control one or more of the motors' torque, RPM, thrust, and blade pitch. The executed programs may comprise lookup tables and/or mathematical functions that are made to provide control signals, in response to the received signals, so as to achieve one or more of the control goals, such as required total thrust, required combined moment, required RPM, required not-to-exceed noise level and the like.

The control system can be implemented as part of the motor controller, or may be separately embodied by an external controller/computer which may be part of an external system. The sensors can be located / embodied internally (integral part of the motor or motor controller) or externally (installed by the system integrator).

It would be appreciated that a selected combination of structure design and operational parameters may provide several performance envelopes, as may be needed. For example, the selection of the available thrust of the propeller and of the respective fan may provide high level of redundancy between the two, so that sudden loss of one of them may cause no more than substantially half of the total available thrust.

Such a flight-envelope-point optimization can be performed in three manners: *a-priori* analysis or testing; real time optimization; or any combination of the above.

*A priori* analysis can be performed using analytic tools (such as CFD tools) and/or mathematical models and/or actual testing such as wind tunnel experiment or noise measurement. Once optimized, the relevant optimization data (such as required RPM for each thrust generator) can be stored in a form of a look-up-tables, to be referred to during actual flight.

A real time optimization can be performed by measuring the optimized parameter in real time, while slightly changing the adjustable EPDF parameters in order to identify the trend of the optimized parameter. For example, measuring the overall thrust per power, while changing the RPM ratio of the fan and outer propeller. If the RPM ratio change increases the thrust per power, this positive trend can be further adjusted. If the RPM ratio change decreases the thrust per power, the adjustment shall be made in the opposite direction.

In order to allow the real time optimization, the optimized parameter needs to be measured, along with, at minimum, the overall thrust of the EDPF, since per flight envelope the air vehicle requires a certain amount of thrust which has to be kept constant. Such thrust measurement can be performed by a strain gauge, load cell, mechanical spring, hydraulic cylinder or any other force/strain measuring device, which will be installed at the EPDF connection point to the airframe.

Such real time optimization can be performed in order to eliminate the EPDF torque which is transferred to the airframe, by setting a counter-rotating fan and propeller parameters in such way that the fan-driving-motor 500 generates the same amount of torque as the propeller-driving-motor 600, but in opposite directions, so the overall torque is close to zero.

Such real time optimization can be performed in order to eliminate the EPDF gyroscopic precession effects, which is transferred to the airframe, by setting a counter-rotating fan and propeller parameters in such way that the fan-driving-motor generates the same amount angular momentum as the propeller-driving-motor, but in opposite directions, so the overall gyroscopic precession effect is close to zero.

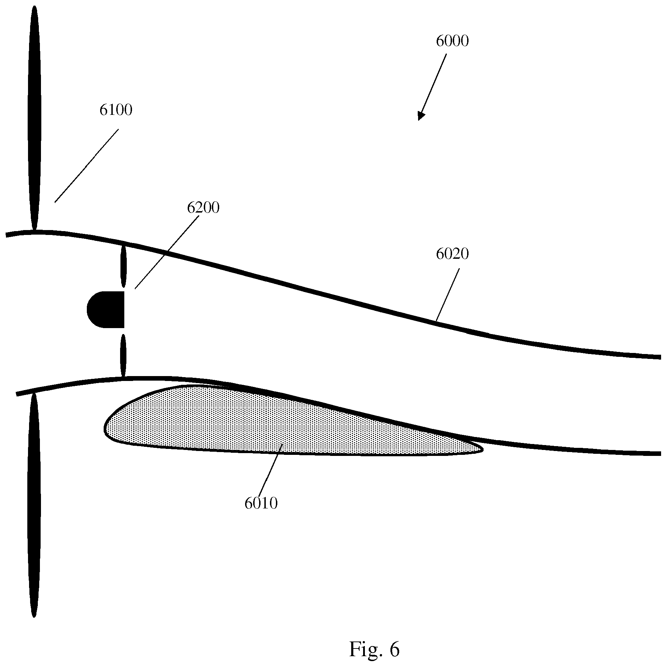

Reference is made now to **Fig. 6**, which is a schematic cross section view of an optional design of EPDF 6000 with duct 6020 designed to consider Airborne structure constraints, according to some embodiments of the present invention. Duct 6020 may be formed so as to smoothly direct the airflow through it over the upper side of wing 6010. Propeller 6100 and fan 6200 are disposed externally and internally to the duct, respectively, in line with the description above. Such design considers existing structural constraints without losing the benefits of the EPDF discussed above.

The list of in-flight optimized parameters may include the EPDF required power (for performance optimization), motors temperature (for cooling effect optimization), and noise (either cabin noise or outer noise).

Such measurements can be performed by a voltage and current probes (for power), thermometers of any kind (for motors temperature) and microphones (for noise), *mutatis mutandis.*

A-priori and real time optimization can be also combined. For example, using an *a-priori* look-up-table to set the initial state of the, said, RPM and then using the real time optimization to further optimize and improve the performance even more, while overcoming inaccuracies in the a-priori data which may be caused by some changes in the flight conditions (for example, outer temperature, air density, etc.)

## Claims

1. A propulsion system (10) for a vehicle, comprising:
a first electric motor (120);
a second electric motor (220);
at least one propeller (100), and
at least one ducted fan (200),
**CHARACTERIZED IN THAT**:
each of the at least one propeller (100) is mounted on an outer perimeter of a respective duct (700) of the at least one ducted fan (200) and is configured to be driven by the first electric motor (120), and
the at least one ducted fan (200) is mounted within the duct (700) and is configured to be driven by the second electric motor (220).

2. The propulsion system (10) of claim 1, wherein the first electric motor (120) and the second electric motor (220) are configured to actuate rotation of the at least one propeller (100) and the at least one ducted fan (200) around a common rotation axis.

3. The propulsion system (10) of claim 1 or claim 2, wherein the first electric motor (120) is configured to control/adjust rotation speed and/or rotation direction of the at least one propeller (100) independently from the second electric motor (220) that is configured to control/adjust rotation speed and/or rotation direction of the at least one ducted fan (200).

4. The propulsion system (10) of any one of claims 1-3, further comprising a controller (5030) which is configured to control rotation speeds and blade pitch angles of the at least one propeller (100) and of the at least one ducted fan (200), to achieve optimized one or more of efficiency of the propulsion system (10), reduction of the noise of the propulsion system (10) and minimization of combined torque of the propulsion system (10) on the vehicle, by independently controlling the RPM of the at least one ducted fan (200), the RPM of the at least one propeller RPM, and the blades pitch angle of the at least one propeller (100).

5. The propulsion system (10) of claim 4, wherein the RPM of the at least one ducted fan (200), the RPM of the at least one propeller RPM and the blade pitch angle of the at least one propeller (100) are determined according to a preloaded performance chart or based on on-going performance measurement of the propulsion system (10).

6. The propulsion system (10) of any one of claims 1-5, wherein duct inner air flow, generated by the ducted fan (200), dissipates the heat generated by the first electric motor (120) and second electric motor (220).

7. The propulsion system (10) of any one of claims 4 or 5, wherein the controller (5030) is for generating destructive interference, wherein the controller (5030) is configured to determine rotation speeds and blade pitch angles according to a preloaded performance chart or based on on-going performance measurement of the propulsion system (10).

8. The propulsion system (10) of any one of claims 1-7, wherein a duct of the at least one ducted fan (200) comprises converging and/or curved elements adapted to compensate for non-straight flow at high angle of attack or sideslip.

9. The propulsion system (10) of any one of claims 1-8, wherein the at least one ducted fan (200) and the at least one propeller (100) are configured to be co-rotating or counter-rotating.

10. The propulsion system (10) of any one of claims 4 or 5, wherein the at least one propeller (100) and the at least one ducted fan (200) are counter-rotating and are coordinated so that the total generated torque is equal to zero or substantially equal to zero.

## Patentansprüche

1. Antriebssystem (10) für ein Fahrzeug, umfassend:
einen ersten Elektromotor (120);
einen zweiten Elektromotor (220);
wenigstens einen Propeller (100), und
wenigstens einen Mantellüfter (200),
**dadurch gekennzeichnet, dass:**
jeder des wenigstens einen Propellers (100) an einem äußeren Umfang eines jeweiligen Mantels (700) des wenigstens einen Mantellüfters (200) montiert ist und dazu eingerichtet ist, von dem ersten Elektromotor (120) angetrieben zu werden, und
der wenigstens eine Mantellüfter (200) innerhalb des Mantels (700) montiert ist und dazu eingerichtet ist, von dem zweiten Elektromotor (220) angetrieben zu werden.

2. Antriebssystem (10) nach Anspruch 1, wobei der erste Elektromotor (120) und der zweite Elektromotor (220) dazu eingerichtet sind, eine Drehung des wenigstens einen Propellers (100) und des wenigstens einen Mantellüfters (200) um eine gemeinsame Drehachse auszulösen.

3. Antriebssystem (10) nach Anspruch 1 oder Anspruch 2, wobei der erste Elektromotor (120) dazu eingerichtet ist, eine Drehgeschwindigkeit und/oder eine Drehrichtung des wenigstens einen Propellers (100) unabhängig von dem zweiten Elektromotor (220) zu steuern / anzupassen, welcher dazu eingerichtet ist, eine Drehgeschwindigkeit und/oder eine Drehrichtung des wenigstens einen Mantellüfters (200) zu steuern / anzupassen.

4. Antriebssystem (10) nach einem der Ansprüche 1-3, ferner umfassend eine Steuereinrichtung (5030), welche dazu eingerichtet ist, Drehgeschwindigkeiten und Blattanstellwinkel des wenigstens einen Propellers (100) und des wenigstens einen Mantellüfters (200) zu steuern, um eine Optimierung zu erreichen, eines oder mehrerer aus einer Effizienz des Antriebssystems (10), einer Reduzierung des Geräuschs des Antriebssystems (10) und einer Minimierung eines kombinierten Drehmoments des Antriebssystem (10) an dem Fahrzeug, durch unabhängiges Steuern der U/min des wenigstens einen Mantellüfters (200), der U/min des wenigstens einen Propellers und des Blattanstellwinkels des wenigstens einen Propellers (100).

5. Antriebssystem (10) nach Anspruch 4, wobei die U/min des wenigstens einen Mantellüfters (200), die U/min des wenigstens einen Propellers und der Blattanstellwinkel des wenigstens einen Propellers (100) gemäß einem vorgeladenen Leistungsdiagramm oder auf Grundlage einer laufenden Leistungsmessung des Antriebssystems (10) bestimmt werden.

6. Antriebssystem (10) nach einem der Ansprüche 1-5, wobei eine Luftströmung im Inneren des Mantels, welche durch den Mantellüfter (200) erzeugt wird, die Wärme ableitet, welche durch den ersten Elektromotor (120) und den zweiten Elektromotor (220) erzeugt wird.

7. Antriebssystem (10) nach einem der Ansprüche 4 oder 5, wobei die Steuereinrichtung (5030) zum Erzeugen einer destruktiven Interferenz vorgesehen ist, wobei die Steuereinrichtung (5030) dazu eingerichtet ist, Drehgeschwindigkeiten und Blattanstellwinkel gemäß einem vorgeladenen Leistungsdiagramm oder auf Grundlage einer laufenden Leistungsmessung des Antriebssystems (10) zu bestimmen.

8. Antriebssystem (10) nach einem der Ansprüche 1-7, wobei ein Mantel des wenigstens einen Mantellüfters (200) konvergierende und/oder gekrümmte Elemente umfasst, welche dafür angepasst sind, eine nicht geradlinige Strömung bei einem hohen Angriffswinkel oder seitlichem Gleiten zu kompensieren.

9. Antriebssystem (10) nach einem der Ansprüche 1-8, wobei der wenigstens eine Mantellüfter (200) und der wenigstens eine Propeller (100) dazu eingerichtet sind, sich gleichläufig zu drehen oder sich gegenläufig zu drehen.

10. Antriebssystem (10) nach einem der Ansprüche 4 oder 5, wobei sich der wenigstens eine Propeller (100) und der wenigstens eine Mantellüfter (200) gegenläufig drehen und derart koordiniert sind, dass das insgesamt erzeugte Drehmoment gleich Null oder im Wesentlichen gleich Null ist.

## Revendications

1. Système de propulsion (10) pour un véhicule, comprenant :
un premier moteur électrique (120) ;
un second moteur électrique (220) ;
au moins une hélice (100), et
au moins une soufflante carénée (200),
**CARACTÉRISÉ EN CE QUE** :
chacune de l'au moins une hélice (100) est montée sur un périmètre extérieur d'un conduit (700) respectif de l'au moins une soufflante carénée (200) et est configurée pour être entraînée par le premier moteur électrique (120), et
l'au moins une soufflante carénée (200) est montée au sein du conduit (700) et est configurée pour être entraînée par le second moteur électrique (220).

2. Système de propulsion (10) selon la revendication 1, dans lequel le premier moteur électrique (120) et le second moteur électrique (220) sont configurés pour actionner une rotation de l'au moins une hélice (100) et de l'au moins une soufflante carénée (200) autour d'un axe de rotation commun.

3. Système de propulsion (10) selon la revendication 1 ou la revendication 2, dans lequel le premier moteur électrique (120) est configuré pour commander/régler une vitesse de rotation et/ou une direction de rotation de l'au moins une hélice (100) indépendamment du second moteur électrique (220) qui est configuré pour commander/régler une vitesse de rotation et/ou une direction de rotation de l'au moins une soufflante carénée (200).

4. Système de propulsion (10) selon l'une quelconque des revendications 1 à 3, comprenant en outre un dispositif de commande (5030) qui est configuré pour commander des vitesses de rotation et des angles de calage de pale de l'au moins une hélice (100) et de l'au moins un soufflante carénée (200), pour parvenir à l'optimisation d'une ou de plusieurs parmi l'efficacité du système de propulsion (10), la réduction du bruit du système de propulsion (10) et la minimisation du couple combiné du système de propulsion (10) sur le véhicule, en commandant indépendamment le régime de l'au moins une soufflante carénée (200), le régime de l'au moins un régime d'hélice, et l'angle de calage de pale de l'au moins une hélice (100).

5. Système de propulsion (10) selon la revendication 4, dans lequel le régime de l'au moins une soufflante carénée (200), le régime de l'au moins un régime d'hélice et l'angle de calage de pale de l'au moins une hélice (100) sont déterminés selon un graphique de performance préchargé ou sur la base d'une mesure de performance en cours du système de propulsion (10).

6. Système de propulsion (10) selon l'une quelconque des revendications 1 à 5, dans lequel un flux d'air intérieur de conduit, généré par la soufflante carénée (200), dissipe la chaleur générée par le premier moteur électrique (120) et le second moteur électrique (220).

7. Système de propulsion (10) selon l'une quelconque des revendications 4 ou 5, dans lequel le dispositif de commande (5030) sert à générer une interférence destructrice, dans lequel le dispositif de commande (5030) est configuré pour déterminer des vitesses de rotation et des angles de calage de pale selon un graphique de performance préchargé ou sur la base d'une mesure de performance en cours du système de propulsion (10).

8. Système de propulsion (10) selon l'une quelconque des revendications 1 à 7, dans lequel un conduit de l'au moins une soufflante carénée (200) comprend des éléments convergents et/ou courbés adaptés pour compenser un flux non droit à un angle d'attaque ou de dérapage élevé.

9. Système de propulsion (10) selon l'une quelconque des revendications 1 à 8, dans lequel l'au moins une soufflante carénée (200) et l'au moins une hélice (100) sont configurées pour être corotatives ou contrarotatives.

10. Système de propulsion (10) selon l'une quelconque des revendications 4 ou 5, dans lequel l'au moins une hélice (100) et l'au moins une soufflante carénée (200) sont contrarotatives et sont coordonnées de sorte que le couple généré total soit égal à zéro ou sensiblement égal à zéro.
